Europäisches Patentamt

European Patent Office

Office européen des brevets

(19)

(11) EP 0 714 504 B1

# (12) FASCICULE DE BREVET EUROPEEN

(45) Date de publication et mention
de la délivrance du brevet:
**03.03.1999 Bulletin 1999/09**

(21) Numéro de dépôt: **94919729.7**

(22) Date de dépôt: **17.06.1994**

(51) Int Cl.⁶: **G01J 3/18**, G02B 5/32,
H04N 9/31

(86) Numéro de dépôt international:
**PCT/FR94/00733**

(87) Numéro de publication internationale:
**WO 95/35486 (28.12.1995 Gazette 1995/55)**

(54) **PROJECTEUR A CRISTAL LIQUIDE AVEC DISPOSITIF HOLOGRAPHIQUE DE FILTRAGE**

FLÜSSIGKRISTALLPROJEKTOR MIT HOLOGRAPHISCHER FILTERVORRICHTUNG

LIQUID CRYSTAL PROJECTOR WITH HOLOGRAPHIC FILTERING DEVICE

(84) Etats contractants désignés:
**DE GB IT NL**

(43) Date de publication de la demande:
**05.06.1996 Bulletin 1996/23**

(73) Titulaire: **THOMSON-CSF**
**75008 Paris (FR)**

(72) Inventeurs:
• **LOISEAUX, Brigitte**
**F-92402 Courbevoie Cédex (FR)**

• **JOUBERT, Cécile**
**F-92402 Courbevoie Cédex (FR)**
• **HUIGNARD, Jean-Pierre**
**F-92402 Courbevoie Cédex (FR)**

(56) Documents cités:
**EP-A- 0 383 646**          **US-A- 4 752 130**

• **PATENT ABSTRACTS OF JAPAN vol. 12, no. 411
(P-779) 31 Octobre 1988 & JP,A,63 147 135
(KONICA) 20 Juin 1988**

## Description

L'invention concerne un projecteur à cristal liquide, permettant notamment de réaliser une correction chromatique.

La télévision évolue aujourd'hui vers la présentation d'images de grande dimension et à haute résolution (format TVHD). Le projecteur à cristal liquide constitue l'une des solutions actuellement en cours de développement pour satisfaire à ces besoins. Un tel projecteur est divulgué dans le document EP-A-0 383 646.

Ces dispositifs fonctionnent suivant le même principe qu'un projecteur de diapositives dans lequel on a remplacé celle-ci par une valve à cristal liquide. Ils comprennent généralement trois cellules, une pour chacune des couleurs primaires (rouge, vert, bleu) provenant d'une même source de lumière blanche. L'objectif étant de réaliser une image de bonne qualité, les principaux critères d'évaluation de l'image seront les suivants :

- luminosité
- résolution et niveaux de gris
- colorimétrie.

L'obtention de coordonnées trichromatiques les plus saturées possibles permettra d'augmenter le nombre de nuances restituées dans l'image et ainsi de s'approcher du contenu colorimétrique codé lors de la prise de vue. Ce problème constitue l'un des paramètres important à prendre en compte pour définir l'architecture des projecteurs à cristaux liquides et le choix des sources d'éclairage.

L'une des principales limitations des dispositifs de projection à cristaux liquides est apportée par le dispositif d'illumination. Cette limitation provient en partie du choix réduit de sources blanches compatibles avec cette application. En effet les sources blanches doivent à la fois satisfaire à des critères d'efficacité lumineuse élevée, de stabilité de leur colorimétrie, de durée de vie élevée, ainsi qu'à des impératifs de coût. Il apparait aujourd'hui que les lampes à arc de type halogénure métallique constituent le meilleur compromis à ces critères.

Ces lampes à arc plus particulièrement développées pour la projection cinéma présentent une excellente colorimétrie pour cette application puisque ses coordonnées chromatiques, x/y sont très proches de celles du "BLANC" de référence du standard télévision (noté D65 tel que x = 0.313 ; y = 0.329).

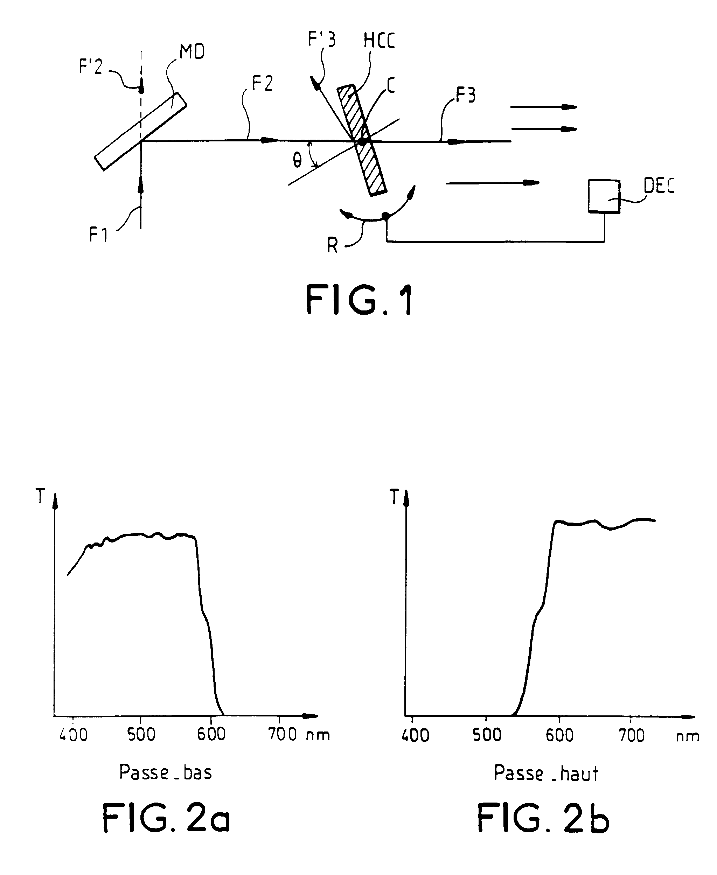

Néanmoins, pour pouvoir être utilisées dans un projecteur à cristal liquide il est nécessaire de procéder à la séparation chromatique de l'émission de la source. Cette fonction est réalisée à l'aide de miroirs dichroïques (MD) dont des courbes typiques de transmission spectrales sont données sur la figure 2. Leurs caractéristiques seront choisies de manière à obtenir l'éclairement de la cellule à cristal liquide par des couleurs primaires aussi proches que possible du standard de codage des signaux TV.

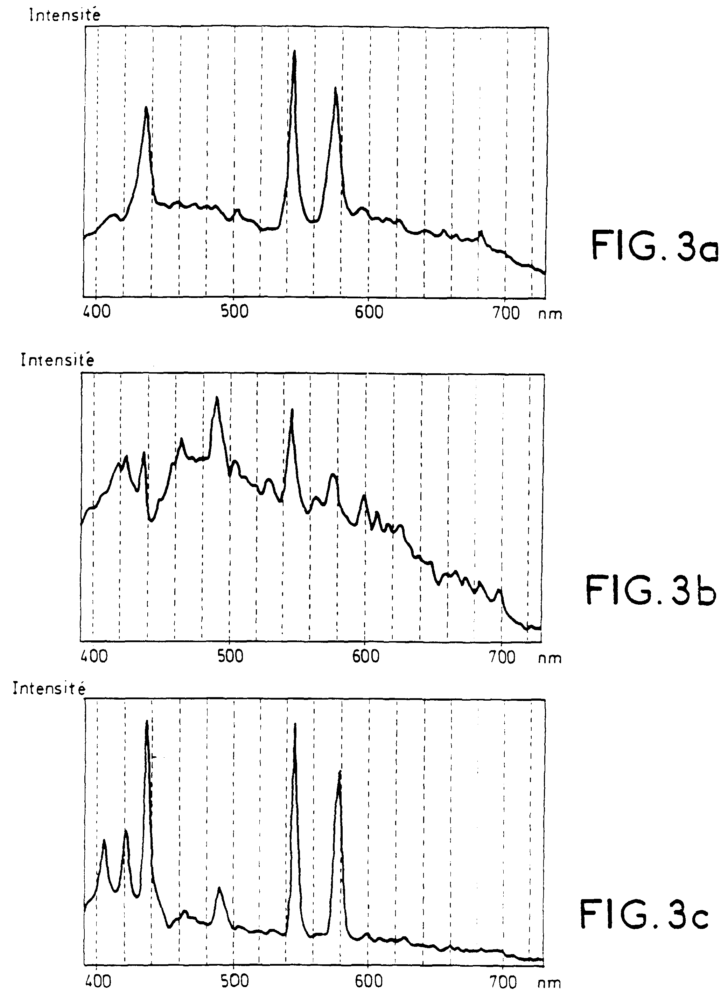

Les différences notables des caractéristiques spectrales du rayonnement émis par les lampes à halogénures métalliques (figure 3) nécessitent de spécifier pour chaque type de lampe le jeu de miroirs dichroïques à utiliser. L'une des difficultés à résoudre provient du filtrage correct des bandes spectrales suivantes :

- bleu-vert : 475-515 nm
- jaune : 565-600 nm comprenant en particulier une raie d'émission du mercure très intense proche de 570 nm.

En effet les fonctions dichroïques passe-bas ou passe-haut répondant à cette application nécessitent des précisions importantes sur :

- la fréquence de coupure
- la pente du filtrage spectral.

Les précisions standards de réalisation de ces fonctions, typiquement 15 nm, ne permettront d'obtenir une colorimétrie acceptable qu'au prix d'une perte de flux en sous dimensionnant ces miroirs dichroïques. La réalisation de filtres répondant aux spécifications requises (précision d'environ 5 nm sur la fréquence de coupure) entrainerait d'une part un coût élevé et d'autre part un bilan lumineux plus faible, leur transmission étant plus faible.

L'invention concerne un projecteur à cristal liquide, caractérisé en ce qu'il comporte :

- une source émettant dans une gamme de longueurs d'ondes comprenant plusieurs longueurs d'ondes primaires de la gamme des couleurs ;
- au moins un dispositif holograhique de filtrage réfléchissant les longueurs d'ondes indésirables et étant transparent aux longueurs d'ondes désirées ;
- au moins un séparateur dichroïque séparant les gammes de longueurs d'ondes correspondant à des gammes de longueurs d'ondes de couleurs primaires différentes ;
- une cellule de modulation spatiale de lumière par gamme de longueurs d'ondes de couleurs primaires pour moduler chaque faisceau d'une longueur d'onde primaire ;
- au moins un dispositif de combinaison des différents faisceaux modulés.

Les différents objets et caractéristiques de l'invention apparaitront plus clairement dans la description qui va suivre et dans les figures annexées qui représentent :

- la figure 1, un dispositif de filtrage pour l'utilisation dans un projecteur selon l'invention ;

- les figures 2a et 2b, des exemples typiques de filtrage en longueurs d'ondes ;
- les figures 3a à 3c, des spectres d'émission de lampe à arc de type halogénure métallique ;

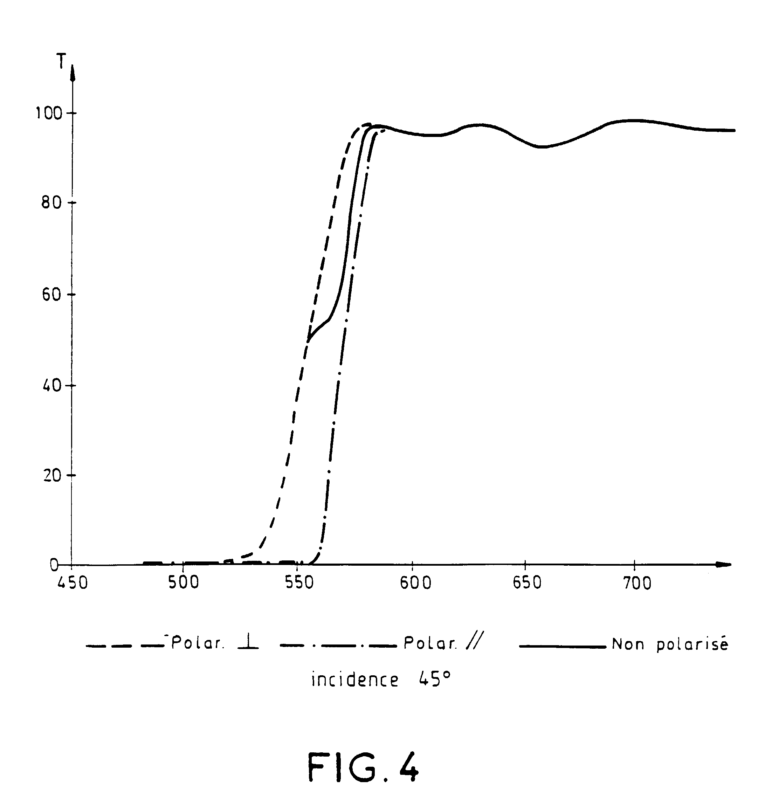

- la figure 4, des diagrammes mettant en évidence l'influence de la polarisation sur la réflectivité des miroirs dichroïques;
- les figures 5a à 5d, des exemples de filtrages de la bande spectrale jaune ;
- la figure 6, un tableau fournissant les caractéristiques des différents types de filtrage des figures 5a à 5c ;
- les figures 7a à 7c, les diagrammes de couleurs pour les filtrages des types 1, 2 et 3 des figures 5a à 5c ;
- la figure 8, un tableau donnant les caractéristiques de filtrage de la bande spectrale jaune avec un dispositif pour l'utilisation dans un projecteur selon l'invention ;
- la figure 9, un exemple de filtrage holographique ;

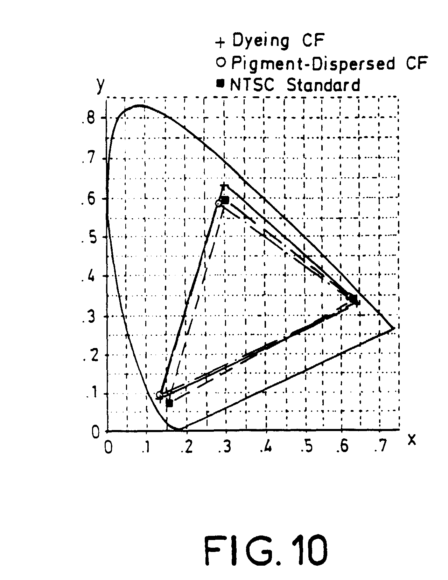

- la figure 10, un exemple typique de diagramme de couleur généré par une matrice de filtres colorés connus dans la technique ;
- la figure 11, un exemple de réalisation d'un dispositif de correction pour projecteur à cristal liquide ;
- la figure 12, une variante de réalisation du dispositif de la figure 11.

En se reportant à la figure 1, on va donc tout d'abord décrire un dispositif de filtrage optique pour l'utilisation dans un projecteur selon l'invention. Ce dispositif comporte un dispositif de séparation dichroïque ou miroir dichroïque MD et un dispositif holographique de filtrage HCC. Une source lumineuse S fournit un faisceau F1 à filtrer qui est reçu par le miroir dichroïque. Celui-ci réfléchit la lumière F2 ayant une gamme de longueur déterminée et qui est transparent à la lumière F'2 possédant une longueur d'onde non contenue dans cette gamme.

La sélectivité de filtrage du miroir dichroïque est limitée et les caractéristiques de la source S peuvent se déplacer dans les longueurs d'ondes. Le filtrage peut donc s'avérer insuffisant. L'invention prévoit donc de combiner au miroir dichroïque un dispositif de filtrage holographique HCC constitué principalement d'une couche en matériau photosensible dans laquelle a été enregistré au moins un réseau de strates permettant de réfléchir les longueurs d'ondes indésirables (faisceau F'3) et d'être transparent (faisceau F3) à la gamme de longueurs d'ondes que l'on désire obtenir.

Le dispositif de filtrage HCC a été enregistré pour réfléchir certaines longueurs indésirables autour de la longueur d'onde à obtenir. Cependant, lors du vieillissement de la source ses caractéristiques peuvent changer et il peut y avoir un changement indésirable de la colorimétrie. De même le remplacement d'une source par une autre part peut conduire à un faisceau F1 présentant des longueurs indésirables différentes. Dans ces deux cas, pour adapter le filtrage on fait tourner le dispositif HCC par rapport à la direction du faisceau F2.

En effet la diffraction dans le dispositif HCC obéit à la loi de Bragg :

$$2n_o \Lambda \sin\theta = k\lambda$$

dans laquelle :

$\Lambda$ est le pas des franges d'interférence inscrites
$n_o$ est l'indice moyen du milieu HCC
$\theta$ est l'angle d'incidence du faisceau F2 avec le plan d'incidence du dispositif HCC
k est l'ordre de diffraction
$\lambda$ est la longueur d'onde du faisceau F2.

Le réseau ayant été inscrit, le pas $\Lambda$ est fixé.

Pour changer la longueur d'onde diffractée il suffit donc de changer l'angle d'incidence $\theta$ en faisant tourner le dispositif HCC autour de l'axe C à l'aide de moyens représentés par la flèche R. Selon l'invention on prévoit également sur le trajet du faisceau F3, un dispositif de mesure des coordonnées ou flux colorimétrique détectant, dans le faisceau F3 toute longueur d'onde indésirable et permettant d'agir sur les moyens R pour faire tourner le dispositif HCC de façon à obtenir la diffraction des longueurs d'ondes indésirables.

Pour obtenir une bonne réflexion des ondes indésirables on choisira de préférence l'épaisseur d de la couche de matériau photosensible supérieure ou égale voire nettement supérieure à $n_o\Lambda^2/2\pi\lambda$.

A titre d'exemple, on va décrire un dispositif de filtrage permettant d'obtenir la longueur d'onde primaire correspondant au vert.

Le dispositif HCC est réalisé dans des matériaux tels qu'indiqués dans les documents :

- "Hologram recording with new photopolymer system" R.T. Ingman, H.L. Fielding, Opt. Eng. 24, 808 (1985) ;
- "Hologram recording in Du Pont's new photopolymer materials" A.M. Weber, W.K. Smothers, T.J. Trout, D.J. Mickish, Practical Holography IV, SPIE Proceedings, 1212 (1990).

On propose ici un exemple de réalisation de ce type de composant dans des matériaux tels que la gélatine bichromatée ou les photopolymères dont on sait que leurs caractéristiques de modulation d'indice sont largement compatibles avec cette application (limite supérieure du matériau $\Delta n = 0,08$).

Cas du filtrage de la bande spectrale jaune :

Par exemple si la source utilisée possède la répartition spectrale de la figure 3a, il faut réaliser un filtrage de la bande spectrale jaune.

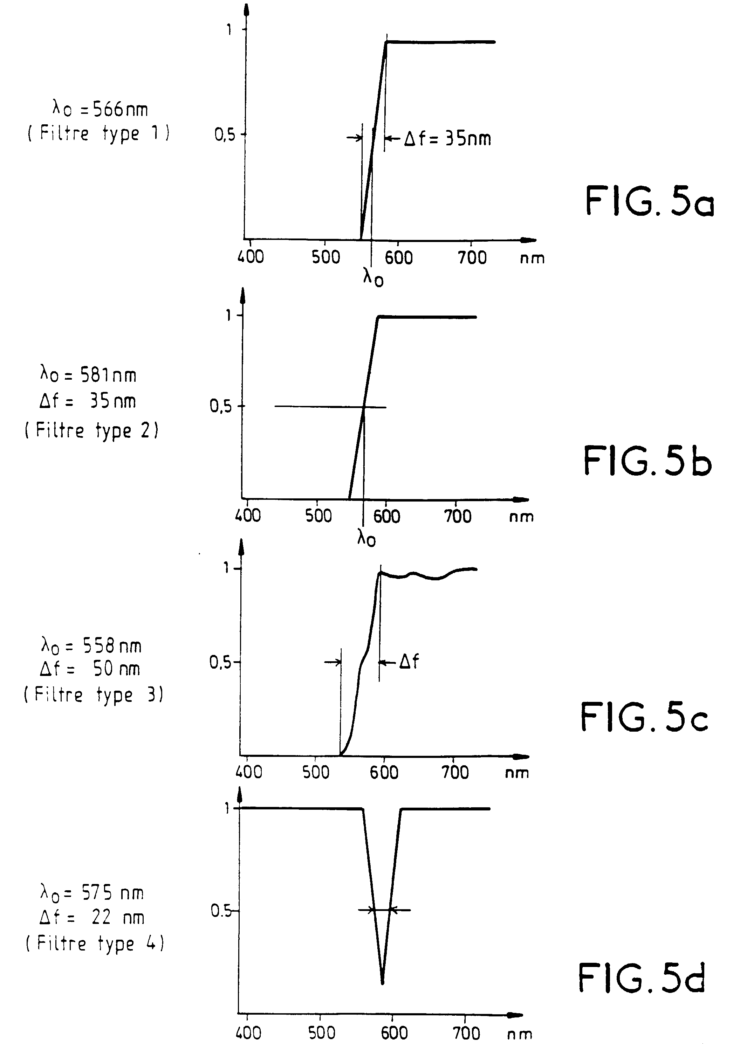

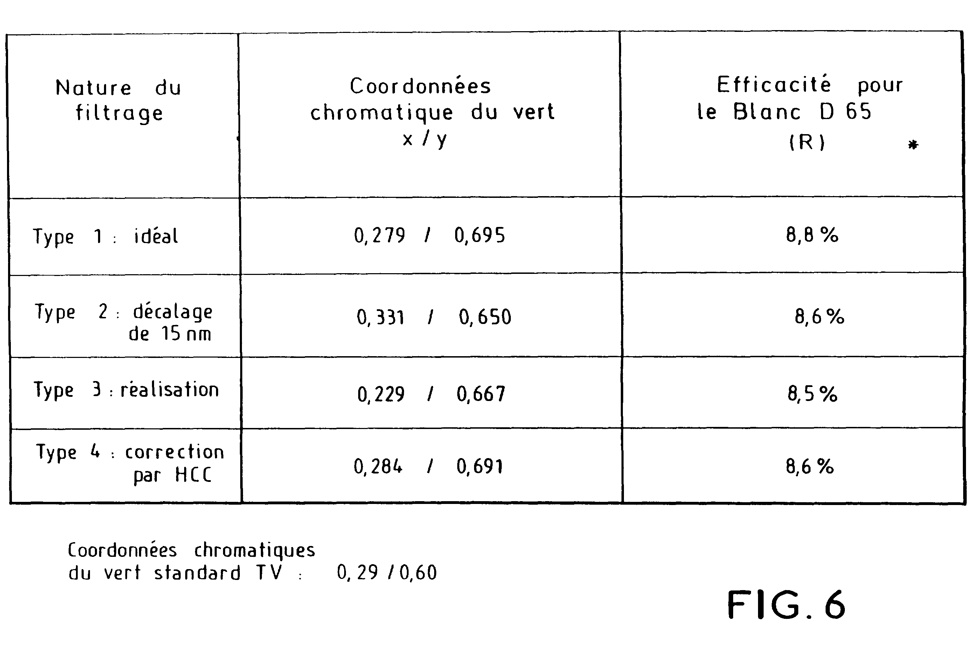

Un filtrage idéal entre 515-565 nm de la bande verte par un jeu de filtre présentant une caractéristique du type de la figure 5a (filtre type 1) conduit aux coordonnées chromatique x/y et au bilan lumineux R données dans le tableau récapitulatif présenté en figure 6.

Le bilan R prend en compte les corrections de balance nécessaires à l'obtention du "Blanc" de référence D65.

Cependant, il peut exister des écarts colorimétriques par exemple de 15 nm par rapport au filtrage idéal de la figure 5a, les résultats obtenus pour un filtrage de type 2 (figure 5b) de la bande jaune qui présente un écart de 15 nm par rapport au filtrage idéal précédent (type 1) sont donnés sur le tableau de la figure 6.

Un filtrage réel tel qu'obtenu avec un filtre (sans le dispositif de filtrage de l'invention) dont la caractéristique est du type 3 représenté en figure 5c fournit les coordonnées chromatiques indiquées sur la figure 6 (type 3).

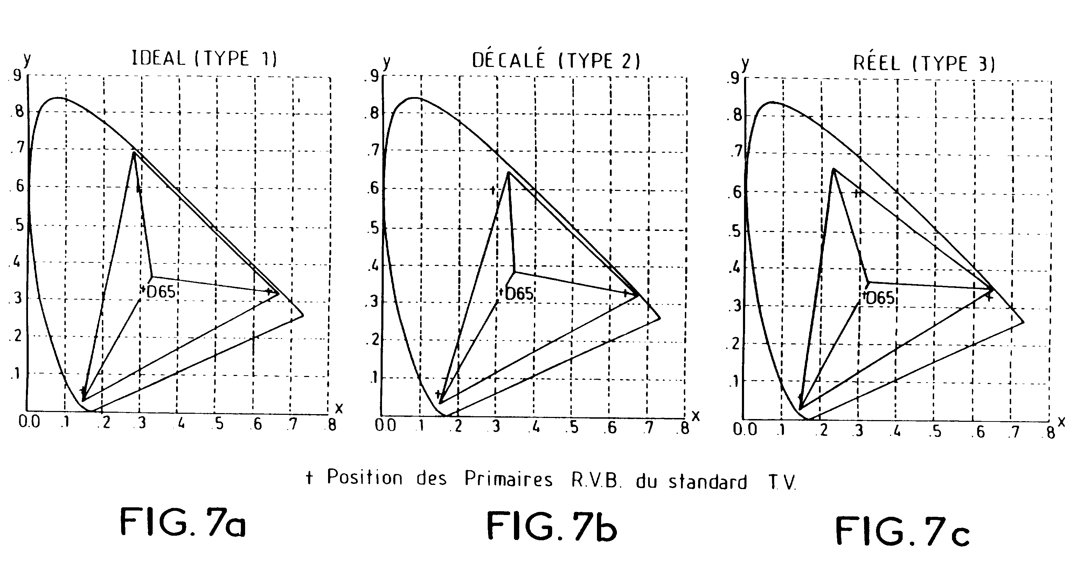

Les diagrammes de couleurs de ces filtrages représentés sur les figures 7a, 7b, 7c, montrent bien que les écarts possibles par rapport au filtrage idéal réduisent considérablement la palette des couleurs disponibles et nécessitent des corrections sur le signal vidéo pour restituer les dominantes correctes des images vidéo.

Selon l'invention, on prévoit l'utilisation d'un filtre correcteur (HCC) de caractéristiques suivantes :

- longueur d'onde de filtrage 575 nm
- largeur à 3 dB du filtrage 22 nm
- transmission à 575 nm de 16 %
- transmission moyenne en-dehors du filtrage de 98 %

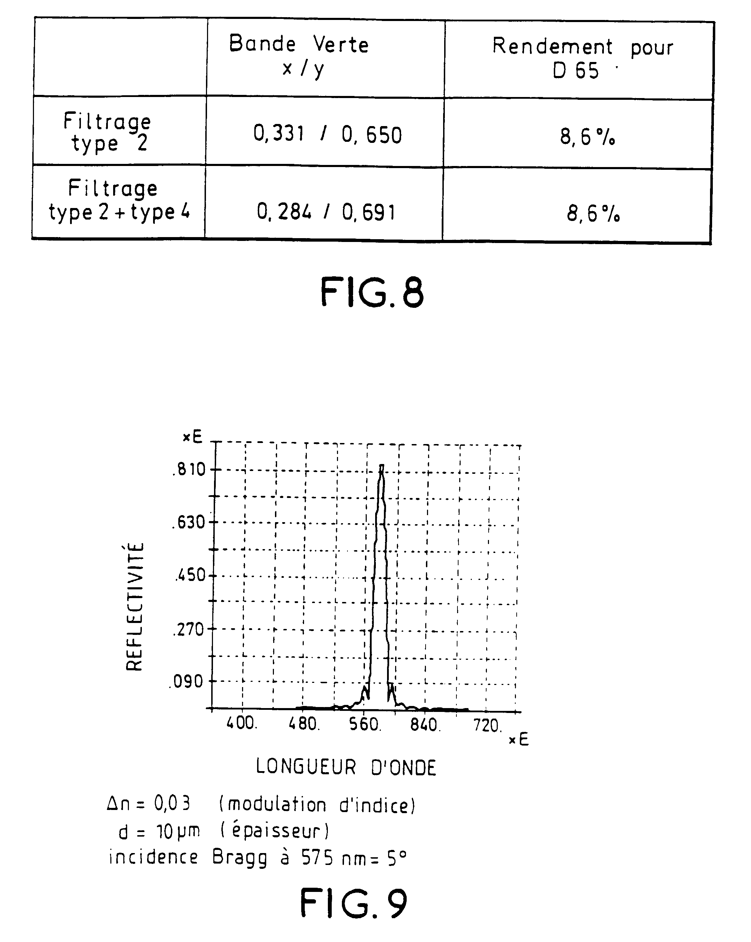

Les résultats présentés sur la figure 8 montrent que l'on rétablit dans le cas du filtrage type 2 les mêmes primaires que celles réalisées par le filtrage idéal de type 1. Dans ce cas les rendements lumineux restent équivalents.

Un exemple de réalisation pratique de ce type de filtre est donné en figure 9 avec un matériau présentant une variation d'indice de 0.03 et une épaisseur fonctionnant à l'incidence de Bragg de 5° pour la longueur d'onde 575 nm.

On s'aperçoit que les tolérances de positionnement angulaire de ce composant sont peu sévères :

Ce composant utilisé à l'incidence de 7° (filtrage optimal pour la longueur d'onde de 580 nm) conduit au même bilan lumineux et à un écart inférieur à 1/1000 sur les coordonnées chromatiques.

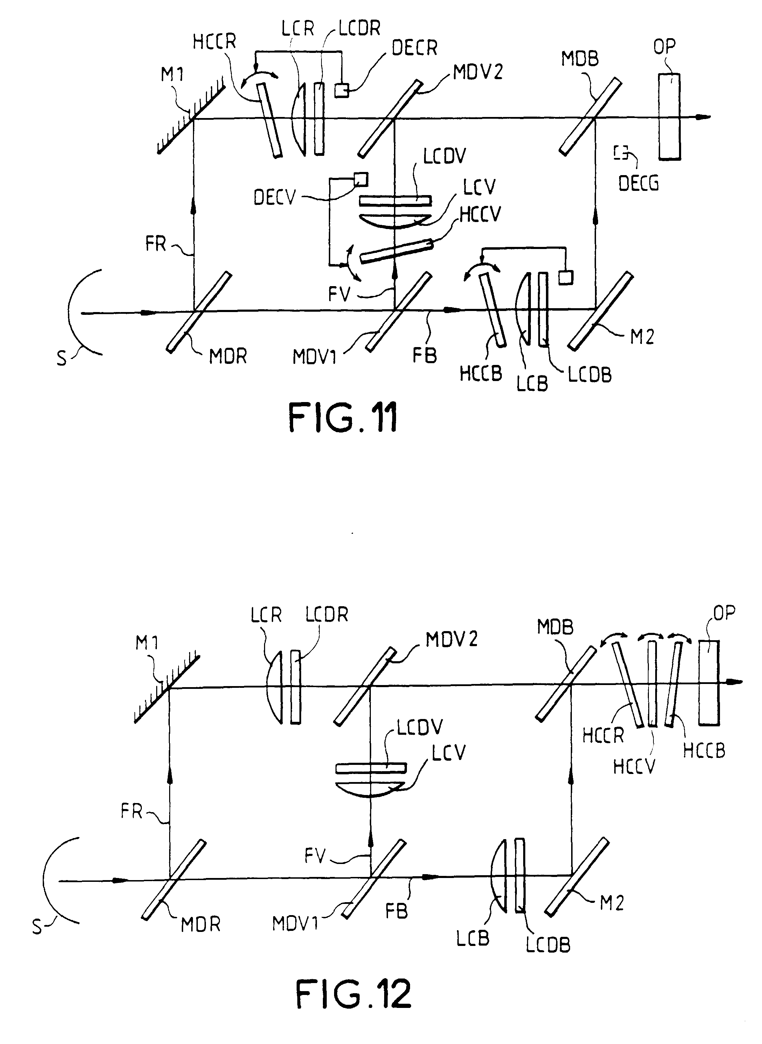

La figure 11 représente une application du dispositif de filtrage à la réalisation d'un projecteur à cristal liquide couleurs selon l'invention.

Un tel projecteur doit posséder une cellule à cristal liquide par couleur primaire (rouge, vert, bleu).

Sur la figure 11, on trouve donc la cellule LCDR pour le rouge, la cellule LCDV pour le vert, et la cellule LCDB pour le bleu. En série avec chaque cellule est placé, un dispositif optique de focalisation LCR, LCV, LCB et un dispositif de filtrage holographique HCCR, HCCV, HCCB. Chaque ensemble constitué d'une cellule et d'un dispositif de filtrage holographique reçoit un faisceau en principe monochrome dans une gamme de longueurs d'ondes donnée. Sur la figure 11, les dispositifs de filtrage holographique sont placés en amont des cellules à cristaux par rapport aux sens des faisceaux lumineux à traiter mais ils pourraient être placés en aval.

Les différents faisceaux lumineux sont obtenus, à partir d'une source unique S, par séparation de différentes gammes de longueurs d'ondes contenues dans le spectre d'émission de la source S et cela à l'aide de séparateurs dichroïques. Sur la figure 11, on utilise des miroirs dichroïques. Le miroir dichroïque MDR reçoit le faisceau de la source S et réfléchit la lumière FR de longueurs d'onde comprise dans la gamme de longueur d'onde du rouge. Le faisceau FR est envoyé par un miroir M1 au dispositif de filtrage holographique HCCR et la cellule à cristal liquide LCDR.

La lumière non réfléchie par le miroir MDR est transmise à un deuxième miroir dichroïque MDV1 qui réfléchit la lumière FV comprise dans la gamme de longueur d'onde du vert. Le faisceau FV est envoyé par le dispositif de filtrage holographique HCCV et à la cellule LCDV.

La lumière non réfléchie par le miroir MDV1 est transmise au dispositif de filtrage holographique HCCB et à la cellule LCDB.

Les différents ensembles dispositifs de filtrage holographiques/cellules à cristaux liquides HCCR/LCDR, HCCV/LCDV, HCCB/LCDB transmettent respectivement des faisceaux aux longueurs d'ondes du rouge, du vert et du bleu. Ces différents faisceaux sont recombinés par une lame dichroïque MDV2 réfléchissant le vert (combinaison du rouge et du vert) et par une lame dichroïque réfléchissant le bleu (combinaison du bleu avec le rouge et le vert).

Une optique de projection OP permet ensuite de projeter l'image couleur résultant de la combinaison des images affichées par les cellules à cristaux liquides LCDR, LCDV, LCDB.

L'architecture du système de la figure 11 a été donnée à titre d'exemple mais toute autre disposition pourrait être prévue pour combiner les faisceaux des différents ensembles dispositifs de filtrage holographiques/cellules à cristaux liquides.

La figure 12 représente une autre forme de réalisation du dispositif de l'invention dans lequel les dispositifs de filtrage HCCR, HCCV et HCCB ne sont pas associés aux cellules à cristaux liquides LCDR, LCDV et LCDB mais sont regroupés en sortie du dispositif.

Selon une autre variante de réalisation non représentée, les dispositifs HCCR, HCCV et HCCB pourraient être prévu entre la source S et le premier miroir dichroïque MDR.

Comme cela a été décrit en relation avec la figure 1, les dispositifs holographiques de filtrage HCCR, HCCV et HCCB sont orientables de façon à modifier l'angle d'incidence de chaque faisceau incidence sur la face d'entrée de chaque dispositif HCCR, HCCV, HCCB et à modifier les gammes de longueurs d'ondes pour lesquels il y a diffraction dans ces dispositifs.

Selon l'invention, on prévoit après filtrage, des dispositifs de mesure de flux colorimétriques DECR, DECB, DECV, détectant les longueurs d'ondes indésirables et commandant chacun en conséquence l'orientation des dispositifs de filtrage HCCR, HCCB, HCCV (voir figure 11).

Selon un mode de réalisation, pour chaque dispositif de mesure de flux colorimétrique, on peut utiliser un élément de détection disposé sur la matrice active de la cellule à cristal liquide correspondante (LCDR, LCDV, LCDB).

Les dispositifs de détection peuvent également être regroupés en un dispositif de mesure DECG comme cela est indiqué en pointillés sur la figure 11 ou comme cela est représenté en figure 12.

Les composants holographiques nécessaires à la correction chromatique sont obtenus par enregistrement holographique de fonctions simples de type miroirs et peuvent être dupliqués par des moyens de copie optique.

Les contraintes sur leur longueur d'onde de fonctionnement sont réduites du fait que l'ajustement des coordonnées chromatiques est obtenu par le positionnement angulaire de ce composant : la précision de 5 nm est obtenue avec une tolérance de quelques degrés sur le positionnement angulaire du composant.

Les paramètres physiques du composant, épaisseur et variation d'indice déterminent la largeur spectrale de la bande à filtrer.

Ces composants, de technologie plus simple, peuvent aussi remplacer les traitements multi-couches diélectriques des lentilles de champ qui effectuent une partie de ces corrections chromatiques.

Cette solution permet d'envisager une architecture de projecteur unique, utilisant des miroirs dichroïques de caractéristiques standards compatible avec des sources d'éclairage présentant des répartitions spectrales de natures différentes.

Ces composants holographiques de correction lorsqu'ils fonctionnent au voisinage de l'incidence normale présentent l'avantage d'avoir des caractéristiques de filtrage identique pour les deux composantes de polarisations. Ceci permet donc la compensation, sans perte de flux, des écarts de réflectivité spectrale existants entre les deux composantes de polarisation inhérents à l'utilisation des composants dichroïques à des incidences > 20°.

Le dispositif de projection de l'invention permet donc par l'utilisation de composants holographiques correcteurs de couleurs, d'ajuster simplement les coordonnées chromatiques des trois primaires R, V, B, d'un projecteur à cristal liquide.

Ce dispositif est constitué principalement d'une source de lumière blanche (S), de miroirs dichroïques pour la séparation des primaires et de composants holographiques destinés aux corrections chromatiques. L'image couleur est ensuite obtenue par l'un des moyens de l'art connu (front ou rétro-projection) permettant de recombiner les images issues des trois cellules à cristaux liquides. Les composants holographiques de corrections sont utilisés de préférence au voisinage de l'incidence normale et du type structure de phase photoinduite (modulation de l'indice d'un milieu de quelques dizaines de microns d'épaisseur).

Lors du vieillissement des lampes, il peut apparaître des modifications de leur contenu colorimétrique. Il peut aisément être envisagé d'effectuer les corrections nécessaires par rotation des composants holographiques de la même manière que l'on effectue des corrections de gain dans les tubes cathodiques couleurs.

Ce type d'asservissement présente l'avantage de rendre également possible l'utilisation de sources à spectre de raies, ou bien de trois sources émettant des raies spectrales étroites. En effet le manque de stabilité relative entre les luminances de ces différentes raies constitue actuellement l'un des obstacles à leur utilisation comme source d'éclairage pour les projecteurs à cristaux liquides.

En assurant des primaires dont les coordonnées chromatiques ont les mêmes longueurs d'onde dominantes que celles du codage du signal vidéo, on réduit ainsi le nombre de corrections électroniques à effectuer avant d'adresser les cellules à cristaux liquides.

Le dispositif de correction chromatique faisant l'objet de ce Brevet peut également être intégré dans un projecteur à cristaux liquides monochrome, comprenant un écran muni soit de filtres colorés, soit de microlentilles holographiques destinées à la focalisation spatiochromatique de la source d'éclairage. Dans ces conditions, il est possible de pallier au principal inconvénient des dispositifs monochromes, à savoir le manque de pureté spectrale des primaires générées par les filtres colorés.

## Revendications

1. Projecteur à cristal liquide caractérisé en ce qu'il comporte :

    - une source (S) émettant dans une gamme de longueurs d'ondes comprenant plusieurs longueurs d'ondes primaires de la gamme des couleurs ;
    - au moins un dispositif holographique de filtrage (HCCR, HCCV, HCCB) réfléchissant des longueurs d'ondes indésirables et étant transparent aux longueurs d'ondes désirées ;
    - au moins un séparateur dichroïque séparant les gammes de longueurs d'ondes correspondant à des gammes de longueurs d'ondes de couleurs primaires différentes ;

- une cellule de modulation spatiale de lumière par gamme de longueurs d'ondes de couleurs primaires pour moduler chaque faisceau d'une longueur d'onde primaire ;

- au moins un dispositif de combinaison (MDV2, MDB) des différents faisceaux modulés.

2. Projecteur selon la revendication 1, caractérisé en ce que le dispositif holographique (HCC) comporte une couche photosensible dont l'épaisseur est supérieure à

$$n_o \Lambda^2 / 2\pi\lambda$$

dans laquelle :

- $n_o$ est l'indice moyen de la couche photosensible

- $\Lambda$ est le pas des franges d'interférence inscrites dans la couche photosensible ;

- $\lambda$ est la longueur d'onde d'enregistrement ou la gamme de longueurs d'ondes d'enregistrement du milieu photosensible correspondant aux longueurs d'ondes indésirables à diffracter.

3. Projecteur selon la revendication 1, caractérisé en ce que le dispositif holographique de filtrage (HCC) possède au moins un réseau d'indice enregistré de façon à diffracter une longueur d'onde ou une gamme de longueurs d'ondes que l'on veut éliminer, des moyens de rotation (R) étant prévus pour faire tourner le dispositif holographique de filtrage (HCC) par rapport à la direction du faisceau à filtrer (F2).

4. Projecteur selon la revendication 3, caractérisé en ce qu'il comporte un système de mesure du flux colorimétrique et de contre-réaction disposé sur le trajet du faisceau filtré (F3) détectant dans ce faisceau filtré toute longueur d'onde indésirable et agissant sur les moyens de rotation (R) pour faire tourner le dispositif holographique de filtrage (HCC) par rapport à la direction du faisceau à filtrer (F2).

5. Projecteur selon la revendication 1, caractérisé en ce qu'il comporte au moins deux séparateurs dichroïques (MDR, MDV1) séparant le faisceau délivré par la source en trois faisceaux (FR, FV, FB) correspondant chacun à une couleur primaire ; une cellule de modulation spatiale de lumière (LCDR, LCDV, LCDB) et un dispositif holographique de filtrage (HCCR, HCCV, HCCB) étant couplé à chaque faisceau de couleur primaire (FR, FV, FB).

6. Projecteur selon la revendication 1, caractérisé en ce que chaque dispositif holographique de filtrage (HCCR, HCCV, HCCB) étant placé en amont d'une cellule (LCDR, LCDV, LCDB) selon le sens de chaque faisceau de couleur primaire.

7. Projecteur selon la revendication 1, caractérisé en ce que le dispositif holographique de filtrage est placé entre la source et le séparateur dichroïque.

8. Projecteur selon la revendication 1, caractérisé en ce que le dispositif holographique de filtrage est placé en aval du dispositif de combinaison selon le sens de la lumière transmise à ce dispositif.

9. Projecteur selon l'une des revendications 7 ou 8, caractérisé en ce que le dispositif holographique de filtrage comporte plusieurs dispositifs élémentaires (HCCR, HCCV, HCCB) correspondant chacun à une gamme de longueurs d'ondes indésirables.

10. Projecteur selon l'une des revendications 1 à 9, caractérisé en ce que chaque dispositif holographique de filtrage (HCCR, HCCV, HCCB) est orientable de façon à modifier l'angle d'incidence du faisceau transmis de la source sur la face d'incidence de chaque dispositif.

11. Projecteur selon la revendication 10, caractérisé en ce qu'il comporte au moins un dispositif de mesure du flux colorimétrique (DEC) détectant les longueurs d'ondes issues de chaque dispositif holographique de filtrage et commandant l'orientation de chaque dispositif holographique de filtrage pour éliminer les longueurs d'ondes indésirables.

12. Projecteur selon la revendication 11, caractérisé en ce qu'un dispositif de mesure de flux colorimétrique (DEC) est intégré dans la matrice active d'une cellule à cristal liquide (LCDR, LCDV, LCDB).

13. Projecteur selon la revendication 12, caractérisé en ce que le dispositif de mesure de flux colorimétrique est un élément de détection prenant la place d'un élément image d'une cellule à cristal liquide.

**Patentansprüche**

1. Flüssigkristallprojektor, dadurch gekennzeichnet, daß er aufweist:

- eine Quelle (S), die Licht in einem Wellenlängenbereich emittiert, der mehrere Primärwellenlängen der Farbskala umfaßt,

- mindestens eine holographische Filtervorrichtung (HCCR, HCCV, HCCB), die unerwünschte Wellenlängen reflektiert und für die gewünschten Wellenlängen transparent ist,

- mindestens einen dichroitischen Separator, der die Wellenlängenbereiche entsprechend Wellenlängenbereichen von unterschiedlichen Primärfarben voneinander trennt,

- eine räumliche Lichtmodulationszelle für jeden Wellenlängenbereich von Primärfarben, um jeden Strahl einer Primärwellenlänge zu modulieren,

- mindestens eine Vorrichtung (MDV2, MDB) zur Kombination der verschiedenen modulierten Strahlen.

2. Projektor nach Anspruch 1, dadurch gekennzeichnet, daß die holographische Vorrichtung (HCC) eine lichtempfindliche Schicht enthält, deren Dicke größer ist als $n_o \Lambda^2 / 2\pi\lambda$, wobei bedeutet:

- $n_o$ ist der mittlere Brechungsindex der lichtempfindlichen Schicht,
- $\Lambda$ ist der Abstand der auf der lichtempfindlichen Schicht registrierten Interferenzstreifen,
- $\lambda$ ist die Wellenlänge bei der Registrierung oder der Bereich von Wellenlängen bei der Registrierung auf dem lichtempfindlichen Milieu entsprechend den abzulenkenden unerwünschten Wellenlängen.

3. Projektor nach Anspruch 1, dadurch gekennzeichnet, daß die holographische Filtervorrichtung (HCC) mindestens ein so registriertes Brechungsnetz besitzt, daß eine Wellenlänge oder ein Wellenlängenbereich, den man eliminieren will, abgelenkt wird, und daß Mittel (R) vorgesehen sind, um die holographische Filtervorrichtung (HCC) bezüglich der Richtung des zu filternden Strahls (F2) zu drehen.

4. Projektor nach Anspruch 3, dadurch gekennzeichnet, daß er ein System zur Erfassung des kolorimetrischen Flusses und zur Rückkopplung im Verlauf des zu filternden Strahls (F3) besitzt, in dem jede unerwünschte Wellenlänge im gefilterten Strahl erkannt wird und das auf die Mittel (R) zum Drehen der holographischen Filtervorrichtung (HCC) bezüglich der Richtung des zu filternden Strahls (F2) einwirkt .

5. Projektor nach Anspruch 1, dadurch gekennzeichnet, daß er mindestens zwei dichroitische Separatoren (MDR, MDV1) besitzt, die den von der Quelle gelieferten Strahl in drei Strahlen (FR, FV, FB) entsprechend je einer der drei Primärfarben aufteilt, und daß weiter eine räumliche Lichtmodulationszelle (LCDR, LCDV, LCDB) und eine holographische Filtervorrichtung (HCCR, HCCV, HCCB) mit jedem Strahl einer Primärfarbe (FR, FV, FB) gekoppelt ist.

6. Projektor nach Anspruch 1, dadurch gekennzeichnet, daß jede holographische Filtervorrichtung (HCCR, HCCV, HCCB) vor einer Zelle (LCDR, LCDV, LCDB) in Richtung jedes Strahls einer Primärfarbe angeordnet ist.

7. Projektor nach Anspruch 1, dadurch gekennzeichnet, daß die holographische Filtervorrichtung zwischen der Quelle und dem dichroitischen Separator liegt.

8. Projektor nach Anspruch 1, dadurch gekennzeichnet, daß die holographische Filtervorrichtung hinter der Vorrichtung zur Kombination von Primärstrahlen in Richtung des an diese Vorrichtung übertragenen Lichts liegt.

9. Projektor nach einem der Ansprüche 7 und 8, dadurch gekennzeichnet, daß die holographische Filtervorrichtung mehrere elementare Vorrichtungen (HCCR, HCCV, HCCB) entsprechend je einem der unerwünschten Wellenlängenbereiche enthält.

10. Projektor nach einem der Ansprüche 1 bis 9, dadurch gekennzeichnet, daß die holographische Filtervorrichtung (HCCR, HCCV, HCCB) so geschwenkt werden kann, daß der Einfallswinkel des von der Quelle auf die Einfallsseite jeder Vorrichtung übermittelten Strahls verändert wird.

11. Projektor nach Anspruch 10, dadurch gekennzeichnet, daß er mindestens eine Vorrichtung (DEC) zur Messung des kolorimetrischen Lichtflusses besitzt, die die Wellenlängen erfaßt, die aus jeder holographischen Filtervorrichtung austreten, und die Schwenkung jeder holographischen Filtervorrichtung steuert, um die unerwünschten Wellenlängen zu eliminieren.

12. Projektor nach Anspruch 11, dadurch gekennzeichnet, daß eine Vorrichtung (DEC) zur Messung des kolorimetrischen Lichtflusses in die aktive Matrix einer Flüssigkristallzelle (LCDR, LCDV, LCDB) integriert ist.

13. Projektor nach Anspruch 12, dadurch gekennzeichnet, daß die Vorrichtung zur Messung des kolorimetrischen Lichtflusses ein Detektorelement ist, das den Platz eines Bildelements einer Flüssigkristallzelle einnimmt.

## Claims

1. Liquid crystal projector, characterized in that it includes:

- a source (S) emitting in a range of wavelengths comprising several primary wavelengths of the range of colours;

- at least one holographic filtering device (HCCR, HCCG, HCCB) reflecting unwanted wavelengths are being transparent to wanted wavelengths;
- at least one dichroic separator separating the wavelength ranges corresponding to wavelength ranges of different primary colours;
- one spatial light-modulating cell per range of primary colour wavelengths for modulating each beam of primary wavelength;
- at least one device (DMG2, DMB) for combining the various modulated beams.

2. Projector according to Claim 1, characterized in that the holographic device (HCC) includes a photosensitive layer whose thickness is greater than

$$n_0\Lambda^2/2\eta\lambda$$

in which:

- $n_0$ is the mean index of the photosensitive layer
- $\Lambda$ is the spacing of the interference fringes inscribed in the photosensitive layer
- $\lambda$ is the recording wavelength or the range of recording wavelengths of the photosensitive medium corresponding to the unwanted wavelengths to be diffracted.

3. Projector according to Claim 1, characterized in that the holographic filtering device (HCC) possesses at least one index grating recorded in such a way as to diffract a wavelength or a range of wavelengths which it is desired to eliminate, means of rotation (R) being provided in order to rotate the holographic filtering device (HCC) with respect to the direction of the beam to be filtered (F2).

4. Projector according to Claim 3, characterized in that it includes a colorimetric flux measuring and feedback system arranged in the path of the filtered beam (F3) which detects any unwanted wavelength in this filtered beam and acts on the means of rotation (R) in order to rotate the holographic filtering device (HCC) with respect to the direction of the beam to be filtered (F2).

5. Projector according to Claim 1, characterized in that it includes at least two dichroic separators (DMR, DMG1) separating the beam delivered by the source into three beams (FR, FG, FB) each corresponding to a primary colour; a spatial light-modulating cell (LCDR, LCDG, LCDB) and a holographic filtering device (HCCR, HCCG, HCCB) being coupled to each primary colour beam (FR, FG, FB).

6. Projector according to Claim 1, characterized in that each holographic filtering device (HCCR, HCCG, HCCB) is placed upstream of a cell (LCDR, LCDG, LCDB) according to the direction of each primary colour beam.

7. Projector according to Claim 1, characterized in that the holographic filtering device is placed between the source and the dichroic separator.

8. Projector according to Claim 1, characterized in that the holographic filtering device is placed downstream of the combining device according to the direction of the light transmitted to this device.

9. Projector according to one of Claims 7 or 8, characterized in that the holographic filtering device includes several elementary devices (HCCR, HCCG, HCCB) each corresponding to a range of unwanted wavelengths.

10. Projector according to one of Claims 1 to 9, characterized in that each holographic filtering device (HCCR, HCCG, HCCB) can be oriented so as to modify the angle of incidence of the beam transmitted from the source on the incidence face of each device.

11. Projector according to Claim 10, characterized in that it includes at least one colorimetric flux measuring device (DEC) detecting the wavelengths emerging from each holographic filtering device and controlling the orientation of each holographic filtering device so as to eliminate the unwanted wavelengths.

12. Projector according to Claim 11, characterized in that a colorimetric flux measuring device (DEC) is incorporated in the active matrix of a liquid crystal cell (LCDR, LCDG, LCDB).

13. Projector according to Claim 12, characterized in that the colorimetric flux measuring device is a detection element taking the place of an image element of a liquid crystal cell.

FIG.1

Passe_bas

FIG.2a

Passe_haut

FIG.2b

Intensité

FIG.3a

400    500    600    700    nm

Intensité

FIG.3b

400    500    600    700    nm

Intensité

FIG.3c

400    500    600    700    nm

**FIG. 4**

$\lambda_c = 566\,nm$
( Filtre type 1 )

FIG. 5a

$\lambda_0 = 581\,nm$
$\Delta f = 35\,nm$
( Filtre type 2 )

FIG. 5b

$\lambda_0 = 558\,nm$
$\Delta f = 50\,nm$
( Filtre type 3 )

FIG. 5c

$\lambda_0 = 575\,nm$
$\Delta f = 22\,nm$
( Filtre type 4 )

FIG. 5d

| Nature du filtrage | Coordonnées chromatique du vert x / y | Efficacité pour le Blanc D 65 (R)     * |
|---|---|---|
| Type 1 : idéal | 0,279 / 0,695 | 8,8 % |
| Type 2 : décalage de 15 nm | 0,331 / 0,650 | 8,6 % |
| Type 3 : réalisation | 0,229 / 0,667 | 8,5 % |
| Type 4 : correction par HCC | 0,284 / 0,691 | 8,6 % |

Coordonnées chromatiques
du vert standard TV :    0,29 / 0,60

FIG. 6

EP 0 714 504 B1

IDEAL (TYPE 1)

DÉCALÉ (TYPE 2)

RÉEL (TYPE 3)

† Position des Primaires R.V.B. du standard T.V.

FIG. 7a                    FIG. 7b                    FIG. 7c

EP 0 714 504 B1

| | Bande Verte x / y | Rendement pour D 65 |
|---|---|---|
| Filtrage type 2 | 0,331 / 0,650 | 8,6 % |
| Filtrage type 2 + type 4 | 0,284 / 0,691 | 8,6 % |

# FIG.8

$\Delta n = 0,03$ (modulation d'indice)

$d = 10\,\mu m$ (épaisseur)

incidence Bragg à 575 nm = 5°

# FIG.9

FIG. 10

FIG.11

FIG.12